# FASCICULE DE BREVET EUROPEEN

(11) **EP 2 976 925 B1**
(45) Date de publication et mention de la délivrance du brevet: **03.05.2017**
(21) Numéro de dépôt: 14716896.7
(22) Date de dépôt: 19.03.2014
(51) Int. Cl.: H04W 72/04, H04J 11/00, H04W 72/08

(54) **PROCÉDÉ DE SIGNALISATION DANS UN RÉSEAU DE TÉLÉCOMMUNICATIONS CELLULAIRE**
VERFAHREN ZUR SIGNALISIERUNG IN EINEM ZELLULAREN TELEKOMMUNIKATIONSNETZWERK
METHOD FOR SIGNALLING IN A CELLULAR TELECOMMUNICATIONS NETWORK

(30) Priorité: 19.03.2013 FR 1352453
(43) Date de publication de la demande: 27.01.2016
(73) Titulaire: Orange, 75015 Paris (FR)
(72) Inventeur: HARDOUIN, Eric, F-75015 Paris (FR)
(74) Mandataire: Fontenelle, Sandrine
(86) Numéro de dépôt international: PCT/FR2014/050644
(87) Numéro de publication internationale: WO 2014/147345

(56) Documents cités:
- WO-A2-2009/121025
- WO-A2-2010/036006

## Description

### Arrière-plan de l'invention

L'invention se rapporte au domaine général des télécommunications.

Elle concerne plus particulièrement la signalisation, dans un réseau de télécommunications cellulaire, de ressources allouées à un terminal pour communiquer sur ce réseau.

L'invention a ainsi une application privilégiée, mais non limitative, dans le contexte des réseaux cellulaires de télécommunications mobiles LTE (Long Term Evolution) tels que définis par le 3GPP (Third Generation Partnership Project), et notamment en voie descendante, c'est-à-dire dans le sens de communication de la station de base (ou eNodeB) vers les terminaux mobiles (ou UE pour « User Equipment »).

De façon connue, la capacité des réseaux cellulaires de télécommunications mobiles, et en particulier celle des réseaux LTE, est limitée par les interférences. Ces interférences peuvent être de différentes natures. Parmi les plus dommageables en terme de capacité du réseau cellulaire, on compte notamment :
- l'interférence SU-MIMO (pour Single User - Multiple Input Multiple Output) liée à l'usage d'antennes multiples en émission et en réception, et qui correspond à l'interférence générée entre des flux de données MIMO alloués à un même terminal ;
- l'interférence MU-MIMO (pour Multiple User - Multiple Input Multiple Output) qui correspond à l'interférence générée entre des flux de données MIMO alloués à des terminaux différents ; et
- l'interférence intercellulaire, générée entre des signaux émis par des cellules différentes et à destination de terminaux différents.

Diverses méthodes permettant de réduire l'effet de ces interférences sur les performances du réseau sont connues de l'état de la technique.

Ainsi, les interférences de type SU-MIMO et MU-MIMO peuvent être traitées notamment à l'aide d'une technique de précodage appliquée en émission. Cette méthode consiste en l'application de pondérations complexes aux flux de données émis par les antennes de la station de base de sorte à leur attribuer des propriétés spatiales particulières (par exemple une direction privilégiée). Ainsi, par exemple, on pourra faire en sorte, via ce précodage, de séparer dans l'espace des flux destinés à un même terminal (dans le cas SU-MIMO) ou à des terminaux différents (dans le cas MU-MIMO) afin de permettre au terminal récepteur de détecter chaque flux avec une interférence réduite de la part des autres flux.

L'interférence intercellulaire peut être réduite via l'utilisation de techniques dites CoMP (pour « Coordinated MultiPoint), visant à coordonner l'allocation de ressources et le précodage mis en oeuvre par les stations de base contrôlant des cellules voisines d'une cellule donnée, de sorte à minimiser l'interférence créée sur cette cellule par ses cellules voisines. Ces techniques sont décrites plus en détail dans le document TS 36.819 intitulé « Coordinated Multi-Point operation for LTE physical layer aspects », Release 11, édité par le 3GPP.

Les techniques de précodage les plus efficaces utilisées pour réduire l'interférence MU-MIMO et/ou l'interférence intercellulaire requièrent une connaissance précise en émission du canal de transmission des différents terminaux. Une telle connaissance n'est généralement pas disponible au niveau de la station de base (eNodeB), car elle nécessite une signalisation importante sur la voie de retour entre chaque terminal et la station de base.

Afin de limiter cette signalisation, les informations relatives à la connaissance du canal sont généralement quantifiées. Il s'ensuit une perte de précision de sorte que l'interférence n'est pas en pratique totalement supprimée par le précodage : une part non négligeable d'interférence résiduelle subsiste, ce qui affecte les performances du terminal.

Pour remédier à cet inconvénient, il est connu d'utiliser, au niveau des terminaux, des récepteurs non linéaires mettant en oeuvre des techniques d'annulation d'interférence, tel que par exemple des récepteurs MMSE-SIC (pour Successive Interference Cancellation ou annulation successive d'interférences). De manière générale, et par souci de simplification dans le cas d'un seul interféreur, un tel récepteur estime le flux de données interférent (correspondant à une interférence de type MU-MIMO ou intercellulaire) en mettant en oeuvre par exemple une étape de décodage (de canal) du signal de l'interféreur correspondant. Puis à partir de cette estimation du flux, de l'estimation du canal de l'interféreur et de la connaissance des paramètres de transmission alloués à cet interféreur, le récepteur reconstruit les signaux interférents reçus par le terminal. Le signal interférent reconstruit est ensuite soustrait au signal reçu par le terminal, le signal ainsi nettoyé de l'interférence étant utilisé alors pour détecter le signal utile destiné au terminal.

Les récepteurs non linéaires SIC peuvent traiter un ou plusieurs flux de données interférents destinés à un ou plusieurs terminaux dits interféreurs. Toutefois, comme indiqué précédemment, le processus d'annulation de l'interférence mis en oeuvre par ces récepteurs non linéaires nécessite la connaissance des paramètres de transmission du ou des interféreurs et notamment, dans le cadre d'un réseau de télécommunications LTE, du schéma de modulation et de codage associé à chaque interféreur, des blocs de ressource physiques (ou PRB pour « Physical Resource Block »), éventuellement de la séquence pilote dédiée (appelée DMRS pour « DeModulation Reference Signal ») si elle est utilisée, et de l'identifiant temporaire de réseau ou RNTI (Radio Network Temporary Identifier) attribué de manière unique au terminal interféreur pour l'identifier sur la cellule à laquelle il est attaché.

Pour ces raisons, les récepteurs MMSE-SIC avec décodage de canal de l'interférence sont envisagés communément pour traiter l'interférence SU-MIMO, puisque le terminal équipé du récepteur MMSE-SIC a accès à tous les paramètres de transmission des différents flux qui lui sont transmis. En revanche, leur utilisation pour le traitement de l'interférence MU-MIMO et intercellulaire en voie descendante est plus complexe.

Pour mieux illustrer ce propos, il convient de rappeler comment est réalisée l'allocation des paramètres de transmission dans un réseau LTE, et plus particulièrement comment est effectuée la signalisation des paramètres de transmission ainsi alloués.

Par souci de simplification, on ne traite par la suite que l'interférence intercellulaire, sachant que des propos équivalents s'appliquent également à l'interférence MU-MIMO.

Les paramètres de transmission sont alloués à chaque terminal par la station de base contrôlant la cellule à laquelle est attaché le terminal. Ils sont, à l'exception de l'identifiant RNTI, communiqués à chaque terminal via un canal physique de contrôle dédié appelé PDCCH (Physical Downlink Control Channel). L'identifiant RNTI est signalé au terminal dans un message de signalisation dédié, et plus spécifiquement dans un message de configuration transmis sur le canal PDSCH (Physical Downlink Shared Channel) géré par les couches supérieures du réseau, et notamment par la couche de contrôle des ressources radio ou couche RRC (pour « Radio Resource Control »). Le canal PDCCH est organisé selon plusieurs formats possibles, appelés formats de DCI (pour « Downlink Control Information »). Un format de DCI comporte plusieurs champs, chaque champ portant une information particulière (ex. blocs de transport ou PRB (Physical Resource Block) alloués (un ou deux blocs de transport peuvent être alloués), schémas de modulation et de codage ou MCS (pour « Modulation and Coding Scheme ») alloués pour chaque bloc de transport, etc.). Les bits d'information d'un canal PDCCH (c'est-à-dire les bits du format de DCI) sont ensuite associés à un code CRC (« Cyclic Redundancy Check ») pour permettre la détection d'erreur. La particularité de ce code CRC est qu'il est embrouillé avec l'identifiant RNTI du terminal auquel le canal PDCCH est destiné. Ceci permet au terminal de valider que le canal PDCCH qu'il décode lui est bien destiné. En effet, si un autre terminal (qui dispose d'un identifiant RNTI différent) tente de vérifier la validité du canal PDCCH à l'aide de cet autre identifiant RNTI, la vérification du code CRC lui retourne une erreur.

Les bits d'information ainsi que les bits du CRC sont ensuite codés selon un code convolutif, puis embrouillés par une séquence spécifique à la cellule, avant d'être modulés en QPSK puis transmis. Le rendement effectif du code convolutif, qui dépend du rendement du code ainsi que de l'adaptation de débit effectuée en sortie du codeur pour adapter le nombre de bits codés aux ressources disponibles, est adapté au niveau de protection requis par les conditions radio du terminal auquel le canal PDCCH est destiné. Ainsi, un canal PDCCH destiné à un terminal se trouvant dans de bonnes conditions radio (par exemple proche de la station de base qui le sert) n'a pas besoin de beaucoup de protection et est transmis avec un rendement effectif élevé, ou en d'autres termes sur un faible nombre de ressources. A l'inverse, un terminal se trouvant dans de mauvaises conditions radio se voit allouer un canal PDCCH avec un rendement effectif faible et occupant un nombre plus élevé de ressources.

Dans les réseaux LTE, les ressources occupées par un canal PDCCH alloué à un terminal ne sont pas connues à l'avance par ce dernier. Le terminal doit donc tester un ensemble de combinaisons de ressources possibles, et pour chaque combinaison candidate tenter de décoder un canal PDCCH potentiellement transmis sur ces ressources avec son identifiant RNTI, pour déterminer s'il lui est destiné. L'ensemble des ressources candidates pour un terminal donné est appelé un espace de recherche, et décrit dans le document 3GPP TS 36.213 v11.0.0 intitulé « Evolved Universal Radio Access ; Physical Layer Procedures (Release 11) », septembre 2012, en section 9.1.1 notamment. La position de l'espace de recherche dépend en particulier de la valeur de l'identifiant RNTI.

On comprend bien dès lors que la seule solution possible pour permettre à un terminal victime d'interférence intercellulaire ou MU-MIMO, d'acquérir la connaissance des paramètres de transmission de ses interféreurs afin de pouvoir mettre en oeuvre une méthode de traitement MMSE-SIC pour annuler cette interférence, est de tenter de décoder de manière aveugle l'ensemble des canaux PDCCH de la ou des cellules interférentes (c'est-à-dire des cellules servant des terminaux interféreurs pour le terminal équipé du récepteur MMSE-SIC).

Autrement dit, pour chaque cellule interférente, le terminal « victime » doit examiner chaque canal PDCCH susceptible d'avoir été transmis sur des ressources d'espaces de recherche correspondant à différentes valeurs de RNTI, jusqu'à trouver tous les canaux PDCCH effectivement transmis. Comme le terminal victime n'a pas connaissance des identifiants RNTI attribués aux autres terminaux, un test de toutes les valeurs de RNTI possibles doit être effectué. Une fois l'ensemble des PDCCH transmis par la cellule interférente considérée décodés, le terminal victime peut savoir quels sont les terminaux de cette cellule qui sont transmis sur les mêmes ressources que lui et qui représentent donc des interféreurs pour lui. De plus, le terminal victime a accès aux paramètres de transmission de ses interféreurs et peut ainsi annuler leurs interférences à l'aide d'une technique MMSE-SIC.

Cette solution présente deux inconvénients majeurs : tout d'abord, le décodage aveugle des différents canaux PDCCH d'une cellule est une opération très complexe et particulièrement longue du fait des traitements mis en oeuvre. Elle est par ailleurs fortement consommatrice en énergie de la batterie du terminal. L'application en outre d'un tel décodage aveugle à plusieurs cellules interférentes pour permettre l'utilisation d'une technique de traitement MMSE-SIC en vue d'éliminer l'interférence inter-cellulaire est *a fortiori* difficilement envisageable.

De plus, la nécessité de tester pour chaque PDCCH candidat l'ensemble des valeurs possibles pour l'identifiant RNTI (il y en a 2¹⁶), afin de déterminer à la fois ce dernier et la validité du PDCCH candidat, rend ce procédé quasiment impossible à mettre en oeuvre avec des moyens de calculs réalistes.

Le document WO 2010/108136 propose une méthode permettant de faciliter l'annulation de l'interférence intercellulaire dans un réseau de télécommunications mobiles, et notamment dans un réseau LTE.

Cette méthode consiste à diviser l'ensemble des identifiants temporaires RNTI disponibles pour une cellule en deux sous-ensembles : un premier sous-ensemble d'identifiants RNTI (que l'on désigne dans la suite de ce document par RNTI « ouverts ») destinés à des terminaux susceptibles de causer des interférences, et un second sous-ensemble d'identifiants RNTI destinés à des terminaux susceptibles de subir des interférences. Les identifiants RNTI ouverts du premier sous-ensemble sont publiés (i.e. diffusés), de sorte à être connus des terminaux des cellules voisines. Chaque identifiant RNTI ouvert identifie de manière unique un terminal.

Ainsi, une station de base d'une cellule souhaitant rendre la transmission d'un canal PDCCH vers un terminal interféreur décodable par un terminal d'une cellule voisine peut utiliser pour ce faire un identifiant RNTI ouvert. Le décodage des canaux PDCCH par un terminal victime d'interférences pour acquérir les paramètres de transmission de ses interféreurs est donc facilité puisqu'il peut se limiter aux RNTI ouverts publiés par les cellules, ainsi qu'aux espaces de recherche correspondants.

Le document WO 2010/108136 propose de signaler à un terminal qu'un (ou plusieurs) identifiant RNTI ouvert lui a été attribué, en lui envoyant cet identifiant RNTI ouvert via le canal de contrôle PDCCH ou via un canal physique partagé PDSCH (Physical Downlink Shared CHannel). Sur réception de cet identifiant, le terminal concerné peut alors décoder les canaux PDCCH qui lui sont destinés à l'aide de l'identifiant RNTI ouvert qui lui a été attribué.

Une telle méthode de signalisation peut s'avérer coûteuse en termes de ressources de signalisation, notamment lorsqu'un nombre important d'identifiants RNTI ouverts est attribué, chaque RNTI étant codé sur 16 bits selon le standard LTE. En effet, une signalisation d'un RNTI ouvert via un canal PDCCH implique d'ajouter les 16 bits du RNTI ouvert au format de DCI de ce canal PDCCH, ce qui diminue la couverture du canal PDCCH lorsque le terminal se trouve notamment en bordure de cellule et utilise déjà le format de DCI le plus robuste (c'est-à-dire celui qui occupe le nombre maximal de ressources allouable à un canal PDCCH).

Ceci est d'autant plus vrai que le statut « interféreur » d'un terminal au même titre que les ressources qui lui sont allouées sont susceptibles d'évoluer rapidement dans le temps, et donc de requérir une signalisation importante. Par ailleurs, comme mentionné précédemment, selon cette méthode, un identifiant RNTI ouvert identifie de manière unique un terminal interféreur. Or le nombre de terminaux servis par une station de base d'une cellule peut être élevé (plusieurs dizaines voire centaines de terminaux). L'attribution d'un grand nombre d'identifiants RNTI ouverts par une station de base d'une cellule entraîne donc une grande complexité de calcul pour le décodage des canaux PDCCH associés, ainsi qu'une consommation d'énergie importante pour les terminaux mettant en oeuvre une méthode d'annulation successive d'interférences.

### Objet et résumé de l'invention

L'invention permet notamment de pallier les inconvénients précités en proposant un procédé de signalisation, destiné à être mis en oeuvre par une station de base d'un réseau de télécommunications cellulaire, cette station de base contrôlant au moins une cellule du réseau, le procédé de signalisation comprenant :
- une étape d'attribution, à un terminal interféreur attaché à cette cellule et identifié par la station de base comme étant susceptible d'interférer au moins une communication établie par un autre terminal attaché à cette cellule ou à une cellule voisine :
   o d'un identifiant temporaire de réseau dit ouvert, destiné à être partagé par un nombre prédéterminé de terminaux interféreurs attachés à la cellule contrôlée par la station de base ; et
   o d'un code permettant d'identifier le terminal interféreur parmi ce nombre prédéterminé de terminaux interféreurs ;
- une étape de publication de cet identifiant temporaire de réseau ouvert ;
- une étape d'envoi au terminal interféreur, dans au moins un message de configuration, de l'identifiant temporaire de réseau ouvert et du code qui lui sont attribués ; et
- une étape d'insertion de ce code, dans un champ d'un canal physique de contrôle allouant des ressources de transmission sur le réseau cellulaire au terminal interféreur, ce canal physique étant codé à l'aide de l'identifiant temporaire de réseau ouvert attribué au terminal interféreur et émis sur le réseau cellulaire.

Corrélativement, l'invention vise aussi une station de base d'un réseau de télécommunications cellulaire, contrôlant au moins une cellule du réseau et comprenant :
- un module d'attribution, à un terminal interféreur attaché à ladite cellule et identifié comme étant susceptible d'interférer au moins une communication établie par un autre terminal attaché à ladite cellule ou à une cellule voisine :
   o d'un identifiant temporaire de réseau dit ouvert, destiné à être partagé par un nombre prédéterminé de terminaux interféreurs attachés à la cellule contrôlée par la station de base ; et
   o d'un code permettant d'identifier le terminal interféreur parmi ce nombre prédéterminé de terminaux interféreurs ;
- un module de publication de cet identifiant temporaire de réseau ouvert ;
- un module d'envoi au terminal interféreur, dans au moins un message de configuration, de l'identifiant temporaire de réseau ouvert et du code attribués au terminal interféreur ;
- un module d'insertion de ce code, dans un champ d'un canal physique de contrôle allouant des ressources de transmission sur le réseau cellulaire au terminal interféreur ;
- un module de codage de ce canal physique à l'aide de l'identifiant temporaire de réseau ouvert attribué au terminal interféreur ; et
- un module d'émission de ce canal physique sur le réseau cellulaire.

Par souci de simplification, on entend au sens de l'invention par « terminal interféreur susceptible d'interférer une communication établie par un autre terminal (ou terminal « victime ») », que les transmissions à destination du terminal interféreur en provenance de la cellule à laquelle il est attaché (ou plus précisément de la station de base contrôlant cette cellule) constituent des signaux d'interférence pour la communication établie par le terminal victime.

Par publication de l'identifiant temporaire de réseau ouvert, on entend ici le fait de porter cet identifiant temporaire de réseau ouvert à la connaissance des autres terminaux, autrement dit de le rendre public ou de le diffuser, de sorte que ces terminaux puissent décoder le canal physique PDCCH associé à cet identifiant et destiné audit unique terminal (autrement dit, codé avec cet identifiant), et déterminer ainsi les paramètres de transmission alloués au(x) terminal(ux) au(x)quel(s) cet identifiant temporaire de réseau ouvert est attribué, afin de supprimer l'interférence générée par celui(ceux)-ci à l'aide par exemple d'une méthode d'annulation successive de l'interférence.

A cet effet, l'étape de publication de l'identifiant temporaire de réseau ouvert peut comprendre notamment la diffusion de cet identifiant auprès des autres terminaux attachés à la cellule contrôlée par la station de base, par exemple via des informations système diffusées par la station de base au sein de cette cellule.

Cette variante permet aux terminaux attachés à la même cellule que le terminal interféreur d'identifier rapidement les paramètres de transmission de ce terminal (c'est-à-dire les ressources allouées à ce terminal), et de pouvoir ainsi éliminer l'interférence MU-MIMO générée par ce terminal interféreur.

En variante, l'étape de publication de l'identifiant temporaire de réseau ouvert peut comprendre la diffusion de cet identifiant auprès des terminaux attachés à au moins une autre cellule contrôlée par la même station de base, et voisine de la cellule servant le terminal interféreur.

Selon une autre variante, la publication de l'identifiant temporaire de réseau ouvert peut comprendre la diffusion de cet identifiant auprès d'au moins une autre station de base contrôlant une cellule voisine de la cellule servant le terminal interféreur (typiquement auprès de la ou des cellules voisines servant le ou les terminaux interférés).

Cette variante est particulièrement adaptée pour la suppression de l'interférence intercellulaire.

La publication de l'identifiant de réseau ouvert auprès des terminaux de la cellule ou des cellules voisines est réalisé indépendamment de leur statut vis-à-vis des terminaux interféreurs.

En d'autres mots, l'invention s'applique aussi bien à la suppression de l'interférence MU-MIMO qu'à la suppression de l'interférence intercellulaire.

Elle propose une configuration semi-statique d'un terminal interféreur donné selon un identifiant temporaire ouvert partagé par un nombre prédéterminé de terminaux interféreurs, et un code additionnel permettant de discriminer ce terminal interféreur donné parmi cette pluralité de terminaux interféreurs.

Ce code additionnel est inséré en l'état dans un champ du canal physique de contrôle. Le canal physique de contrôle incluant le code additionnel est codé avec l'identifiant temporaire de réseau ouvert. Ce code additionnel permet d'indiquer, dans chaque canal de contrôle codé à l'aide de l'identifiant temporaire ouvert, à quel terminal interféreur parmi la pluralité de terminaux interféreurs ce canal de contrôle est destiné, moyennant des ressources limitées. Ainsi, le procédé selon l'invention peut désigner à chaque intervalle de temps de transmission (ou TTI pour Transmission Time Interval), à quel terminal parmi la pluralité de terminaux interféreurs partageant un même identifiant temporaire ouvert, est attribué cet identifiant pour ce TTI.

Grâce à l'invention, il est donc possible de servir une pluralité de terminaux interféreurs avec un même identifiant RNTI ouvert : l'invention permet ainsi de s'affranchir de devoir réattribuer fréquemment (par exemple à chaque TTI) un identifiant RNTI ouvert parmi plusieurs terminaux interféreurs en fonction du statut (interféreur ou non) que leur attribue la station de base. Il en découle également un gain en termes de signalisation.

La solution proposée par l'invention est par conséquent très flexible et permet de s'adapter à une évolution rapide du statut interféreur/non interféreur des terminaux, autrement dit à une évolution rapide des décisions prises par la station de base concernant les terminaux interféreurs qu'elle sert avec un identifiant temporaire ouvert.

De cette sorte, les terminaux des cellules voisines peuvent aisément et efficacement mettre en oeuvre un récepteur SIC.

Bien entendu, la taille du code additionnel dépend du nombre de terminaux interféreurs partageant le même identifiant temporaire ouvert. Toutefois, elle est en pratique de taille bien inférieure à la taille d'un identifiant temporaire de réseau utilisé pour identifier un terminal parmi plusieurs terminaux sur un réseau. A titre indicatif, pour un réseau LTE, un tel identifiant (RNTI) est représenté par 16 bits.

Ainsi par exemple, si huit terminaux interféreurs partagent un même identifiant temporaire ouvert, seulement trois bits sont nécessaires pour signaler à quel terminal interféreur est destiné le canal de contrôle codé avec cet identifiant temporaire ouvert. Le nombre de terminaux interféreurs partageant un même identifiant temporaire ouvert est choisi en fonction d'un compromis entre complexité, ressources de signalisation nécessaires et performances, car il découle du schéma proposé par l'invention que deux terminaux partageant un même identifiant temporaire ouvert ne peuvent être servis par la station de base de la cellule à laquelle ils sont attachés dans un même intervalle temporel de transmission (ou TTI pour Transmission Time Interval).

L'invention permet ainsi de gérer un plus grand nombre de terminaux interféreurs tout en limitant le nombre d'identifiants temporaires ouverts nécessaires, et donc la complexité de décodage induite au niveau des terminaux victimes.

Par ailleurs, l'identifiant temporaire de réseau ouvert et le code sont envoyés au terminal interféreur par l'intermédiaire d'au moins un message de configuration, c'est-à-dire d'un message contenant des informations permettant de configurer le terminal. Un tel message de configuration est traditionnellement un message de signalisation géré par les couches hautes du réseau, typiquement par la couche de gestion des ressources radio du réseau. Il peut être émis notamment sur un canal physique partagé (ex. canal PDSCH dans un réseau LTE).

Ainsi, seul le code additionnel attribué au terminal interféreur, qui est de taille restreinte par rapport à l'identifiant temporaire ouvert, est transmis dans le canal physique de contrôle conformément à l'invention, de sorte que les ressources limitées de ce canal physique dédié sont préservées, contrairement à l'état de la technique.

Il convient de noter que l'utilisation d'un code additionnel pour désigner au sein de la pluralité de terminaux interféreurs le terminal interféreur auquel le canal de contrôle est destiné est transparente pour les terminaux victimes mettant en oeuvre une annulation d'interférences. Ce code additionnel n'a aucune importance pour un terminal victime, car il n'intervient pas dans les paramètres de transmission alloué au terminal interféreur à qui ce canal de contrôle est destiné. Aucune complexité additionnelle ne résulte de la présence de ces codes dans les canaux physiques de contrôle pour les terminaux victimes, car ces derniers ne les utilisent pas.

L'invention a donc une application privilégiée mais non limitative lorsque le réseau de télécommunications cellulaire est un réseau LTE et :
- l'identifiant temporaire de réseau ouvert est un identifiant RNTI ;
- le canal physique de contrôle est un canal PDCCH ; et
- le message de configuration est un message de signalisation RRC (Radio Resource Control).

Dans un mode particulier de réalisation, à l'étape d'insertion, le code est inséré dans un champ d'un format de DCI (Downlink Control Information) tel que défini dans le document 3GPP TS 36.212, intitulé « Evolved Universal Terrestrial Radio Access (E-UTRA); Multiplexing and channel coding », v11.1.0, Release 11, décembre 2012, si ce champ n'est pas utilisé.

Préférentiellement, le code est inséré dans un champ d'un format de DCI 2, 2A, 2B, 2C ou 2D.

Ainsi, le champ dans lequel est inséré le code est par exemple un champ « Schéma de modulation et codage (modulation and coding scheme, MCS) » du format de DCI 2, 2A, 2B, 2C ou 2D : ce champ est destiné à indiquer le schéma de modulation et de codage appliqué au second bloc de transport et est inutilisé si un seul bloc de transport est transmis.

L'invention peut de cette sorte être implémentée aisément en utilisant des champs et des formats déjà définis dans le standard LTE.

En variante, le code peut être inséré dans un champ spécifiquement créé à cet effet.

Dans un mode privilégié de réalisation, le procédé de signalisation comprend en outre une étape d'attribution au terminal interféreur d'un identifiant temporaire de réseau dédié réservé à ce terminal interféreur et l'identifiant de manière unique sur la cellule du réseau à laquelle il est attaché.

Autrement dit, le terminal interféreur se voit attribuer à un instant donné deux identifiants temporaires de réseau, son identifiant dédié qui est indépendant de son statut de potentiel interféreur, et un identifiant ouvert publié auprès des autres terminaux. De cette sorte, on s'assure que le terminal interféreur est toujours accessible par la station de base via son identifiant temporaire dédié. Ceci peut être particulièrement avantageux lorsque le terminal interféreur n'interfère aucun autre terminal dans un TTI donné et qu'il n'est donc pas nécessaire de le servir en utilisant un identifiant temporaire ouvert et publié auprès des autres terminaux, tandis qu'un autre terminal partageant le même identifiant temporaire ouvert se trouve être un terminal interféreur dans ce TTI et qu'il est donc utile de le servir à l'aide de cet identifiant temporaire partagé.

L'invention s'appuie non seulement sur la station de base mettant en oeuvre un procédé de signalisation pour attribuer à un terminal interféreur un identifiant temporaire ouvert et un code additionnel, et informer le terminal interféreur de cette attribution, mais également sur le terminal interféreur à proprement parler qui est apte à déterminer à partir du code additionnel qu'un canal de contrôle lui est destiné et à extraire de ce canal de contrôle les paramètres de transmission qui lui sont alloués pour communiquer.

Selon un autre aspect, l'invention vise donc également un procédé de communication, destiné à être mis en oeuvre par un terminal interféreur attaché à une cellule d'un réseau de télécommunications cellulaire, cette cellule étant contrôlée par une station de base, le terminal interféreur étant susceptible d'interférer au moins une communication établie par un autre terminal de ladite cellule ou d'une cellule voisine à cette cellule, le procédé de communication comprenant :
- une étape de réception d'au moins un message de configuration en provenance de la station de base, comprenant un identifiant temporaire de réseau dit ouvert publié ou destiné à être publié par la station de base et un code attribués au terminal interféreur ;
- une étape de décodage d'un canal physique de contrôle allouant des ressources de transmission sur le réseau cellulaire grâce audit identifiant temporaire de réseau ouvert ;
- une étape de vérification de la présence du code attribué au terminal interféreur dans le canal physique décodé ; et
- si le code est présent dans le canal physique décodé, une étape d'utilisation des ressources de transmission allouées dans ce canal pour communiquer sur le réseau cellulaire.
   Corrélativement, l'invention vise aussi un terminal attaché à une cellule d'un réseau de télécommunications cellulaire, ladite cellule étant contrôlée par une station de base, ce terminal étant susceptible d'interférer au moins une communication établie par un autre terminal attaché à ladite cellule et/ou à une cellule voisine à ladite cellule, et comprenant :
- un module de réception d'au moins un message de configuration en provenance de la station de base, comprenant un identifiant temporaire de réseau dit ouvert publié ou destiné à être publié par la station de base et un code attribués au terminal ;
- un module de décodage d'un canal physique de contrôle allouant des ressources de transmission sur le réseau cellulaire à l'aide de l'identifiant temporaire de réseau ouvert ;
- un module de vérification de la présence du code attribué au terminal dans le canal physique décodé ; et
- un module, activé si le code est présent dans le canal physique décodé, d'utilisation des ressources de transmission allouées dans ce canal pour communiquer sur le réseau cellulaire.

L'invention vise aussi un système d'un réseau de télécommunications cellulaire comprenant :
- une station de base selon l'invention contrôlant au moins une cellule du réseau de télécommunications cellulaire ;
- un terminal interféreur selon l'invention attaché à cette cellule ; et
- un terminal interféré par la transmission de la station de base vers ce terminal interféreur, ce terminal interféré étant attaché à la cellule du terminal interféreur ou à une cellule du réseau voisine de cette cellule, et apte à mettre en oeuvre une technique d'annulation d'interférence à l'aide de l'identifiant temporaire de réseau ouvert alloué au terminal interféreur et publié par la station de base.

Le procédé de communication, le terminal et le système bénéficient d'avantages similaires à la station de base et au procédé de signalisation.

Dans un mode particulier de réalisation, les différentes étapes du procédé de signalisation et du procédé de communication sont déterminées par des instructions de programmes d'ordinateurs.

En conséquence, l'invention vise aussi un programme d'ordinateur sur un support d'informations, ce programme étant susceptible d'être mis en oeuvre dans une station de base ou plus généralement dans un ordinateur, ce programme comportant des instructions adaptées à la mise en oeuvre des étapes d'un procédé de signalisation tel que décrit ci-dessus.

L'invention vise aussi un programme d'ordinateur sur un support d'informations, ce programme étant susceptible d'être mis en oeuvre dans un terminal ou plus généralement dans un ordinateur, ce programme comportant des instructions adaptées à la mise en oeuvre des étapes d'un procédé de communication tel que décrit ci-dessus.

Chacun de ces programmes peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

On peut également envisager, dans d'autres modes de réalisation, que le procédé de signalisation, le procédé de communication, la station de base, le terminal et le système selon l'invention présentent en combinaison tout ou partie des caractéristiques précitées.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures :
- la figure 1 représente, de façon schématique, un système d'un réseau de télécommunications, une station de base et un terminal conformes à l'invention, dans un mode particulier de réalisation ;
- les figures 2 et 3 représentent schématiquement l'architecture matérielle de la station de base et du terminal illustrés à la figure 1 ;
- la figure 4 représente, sous forme d'ordinogramme, les principales étapes d'un procédé de signalisation selon l'invention dans un mode particulier de réalisation dans lequel il est mis en oeuvre par la station de base de la figure 1 ; et
- la figure 5 représente, sous forme d'ordinogramme, les principales étapes d'un procédé de communication selon l'invention dans un mode particulier de réalisation dans lequel il est mis en oeuvre par le terminal de la figure 1.

### Description détaillée de l'invention

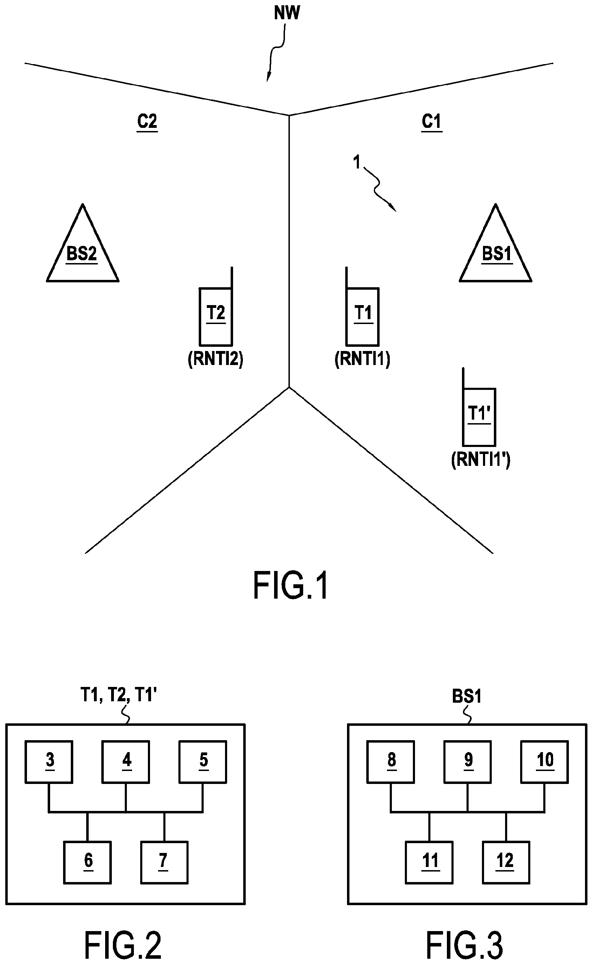

La **figure 1** décrit, dans son environnement, un système 1 d'un réseau de télécommunications cellulaire NW, conforme à l'invention, dans un mode particulier de réalisation.

Dans ce mode particulier de réalisation, le réseau de télécommunications cellulaire NW est un réseau mobile LTE, tel que défini par le 3GPP. Chaque cellule du réseau NW est contrôlée par une station de base (ou eNodeB) servant les différents terminaux (ou UEs pour User Equipments) attachés à la cellule.

A titre illustratif, deux cellules C1 et C2 du réseau cellulaire NW sont représentées sur la figure 1, la cellule C1 étant contrôlée par la station de base BS1 et la cellule C2 étant contrôlée par la station de base BS2. Chaque station de base sert un ou plusieurs terminaux présent(s) dans la (ou les) cellule(s) qu'elle contrôle. Ainsi, sur la figure 1, on envisage un terminal T1 et un terminal T1' attachés à la cellule C1 et servis par la station de base BS1, et un terminal T2 attaché à la cellule C2 et servi par la station de base BS2.

Bien entendu aucune limitation n'est attachée au nombre de stations de base considérées, ni au nombre de cellules gérées par une même station de base, ni encore au nombre de terminaux attachés à chaque cellule.

Conformément au standard LTE, chaque terminal attaché à une cellule se voit attribuer un identifiant temporaire de réseau connu sous le nom de RNTI par la station de base contrôlant cette cellule, afin de communiquer sur le réseau NW. De façon connue de l'homme du métier, cet identifiant RNTI est un identifiant dédié, c'est-à-dire réservé au terminal et qui l'identifie de manière unique sur la cellule à laquelle il est attaché. Ainsi, dans l'exemple envisagé ici, la station de base BS1 attribue un identifiant temporaire de réseau dédié RNTI1 au terminal T1 et un identifiant temporaire de réseau dédié RNTI1' au terminal T1', et la station de base BS2 attribue un identifiant temporaire de réseau dédié RNTI2 au terminal T2.

Pour mieux illustrer l'invention, on suppose ici que le terminal T1 est susceptible d'interférer les communications sur le réseau NW du terminal T1' attaché à la même cellule que lui, c'est-à-dire à la cellule C1 (en créant de l'interférence MU-MIMO par exemple), ainsi que les communications sur le réseau NW du terminal T2 attaché à la cellule C2 (interférence intercellulaire). En d'autres mots, le terminal T1' et le terminal T2 sont victimes des interférences générées par les transmissions en provenance de la station de base BS1 et destinées au terminal T1.

Bien entendu, ces hypothèses ne sont pas limitatives en soi, un terminal pouvant être interféreur pour certains terminaux (c'est-à-dire que les transmissions du réseau vers ce terminal interféreur constituent de l'interférence pour les communications établies par ces terminaux), et subir des interférences (i.e. être interféré) générées par d'autres terminaux (c'est-à-dire par les transmissions du réseau vers ces autres terminaux).

Conformément à l'invention, le système 1 comprend :
- au moins une station de base conforme à l'invention contrôlant au moins une cellule du réseau de télécommunications cellulaire. Cette station de base est dans l'exemple envisagé ici la station de base BS1, qui contrôle la cellule C1 ;
- au moins un terminal interféreur attaché à cette cellule, à savoir, dans l'exemple envisagé à la figure 1, le terminal T1 ; et
- au moins un terminal interféré par ce terminal interféreur, et attaché à la cellule du terminal interféreur ou à une cellule du réseau voisine : en l'occurrence ici, deux terminaux interférés sont considérés, à savoir les terminaux T1' et T2.

Aucune limitation n'est toutefois attachée au nombre de terminaux interféreurs et interférés considéré, ni au type d'interférences créées par le terminal interféreur. Ainsi, l'invention s'applique aussi bien en présence d'interférences de type MU-MIMO générées au sein d'une même cellule comme décrit précédemment, et/ou en présence d'interférences intercellulaires entre des signaux destinés à des terminaux attachés à des cellules voisines.

Les terminaux T1, T1' et T2 peuvent être des terminaux quelconques aptes à communiquer sur le réseau LTE NW, tels que par exemple des téléphones mobiles, des téléphones intelligents (ou « Smartphones »), des ordinateurs portables, etc.

Dans le mode de réalisation décrit ici, par souci de simplification, les terminaux T1, T1' et T2 sont tous des terminaux LTE conformes à l'invention, équipés chacun d'un récepteur non linéaire de type MMSE-SIC, autrement dit, d'un récepteur non linéaire mettant en oeuvre une technique d'annulation successive d'interférence. De tels récepteurs sont connus en soi et ne sont pas décrits davantage ici : ainsi, à titre d'exemple, il peut s'agir de récepteurs non linéaires mettant en oeuvre un décodage de canal à décisions dures, ou de récepteurs non linéaires mettant en oeuvre un décodage de canal turbo (ou itératif) à décisions souples, tels que décrits notamment dans la contribution R1-090232, 3GPP TSG RAN WG1, de janvier 2009 intitulée « Comparing performance, complexity and latency of SC-FDMA SIC and OFDM MLD ».

Dans le mode de réalisation décrit ici, ces terminaux ont l'architecture matérielle d'un ordinateur, telle qu'illustrée à la **figure 2****.**

Plus spécifiquement, chaque terminal comprend notamment un processeur 3, une mémoire morte 4, une mémoire vive 5, une mémoire non volatile 6 et des moyens de communication 7 sur le réseau NW de télécommunications LTE, connus en soi.

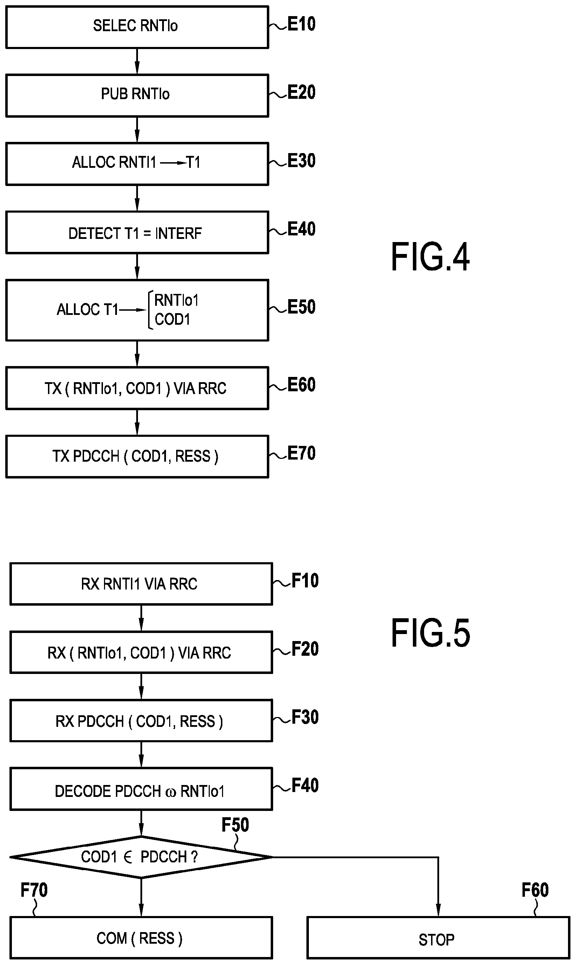

La mémoire morte 4 de chaque terminal constitue un support d'enregistrement conforme à l'invention, lisible par le processeur 3 et sur lequel est enregistré un programme d'ordinateur comportant des instructions pour l'exécution des étapes d'un procédé de communication conforme à l'invention, dont les étapes sont décrites ultérieurement en référence à la figure 5 dans un mode particulier de réalisation.

Ce programme d'ordinateur définit, de façon équivalente, des modules logiciels et fonctionnels des terminaux T1, T1' et T2 aptes à exécuter les différentes étapes du procédé de communication et à interagir avec les composants des terminaux décrits précédemment en référence à la figure 2, tels que notamment un module de réception de messages de configuration, en provenance des couches supérieures du réseau NW et plus précisément de la couche de gestion de ressources radio aussi connue sous le nom de couche RRC, contenant un identifiant temporaire RNTI ouvert et un code additionnel, un module de décodage d'un canal physique PDCCH à l'aide de l'identifiant temporaire RNTI ouvert, un module de vérification que ce canal physique PDCCH comprend le code additionnel et un module d'utilisation des ressources de transmission allouées dans le canal physique PDCCH lorsque celui-ci comprend le code additionnel.

Il convient de noter qu'il n'est pas nécessaire à la mise en oeuvre de l'invention que tous les terminaux aptes à communiquer sur le réseau NW implémentent un récepteur non linéaire utilisant une technique d'annulation d'interférence.

De même, tous les terminaux aptes à communiquer sur le réseau NW ne sont pas nécessairement conformes à l'invention, autrement dit, configurés de sorte à pouvoir décoder des identifiants temporaires ouverts attribués par leur station de base respective afin de permettre aux autres terminaux d'annuler l'interférence qu'ils génèrent. Ainsi, dans l'exemple envisagé ici, il suffit que T1 soit conforme à l'invention, et que les terminaux T1' et T2 soient aptes à décoder un canal PDCCH codé à l'aide d'un identifiant temporaire RNTI ouvert attribué par la station de base BS1 au terminal T1, et à appliquer une méthode d'annulation d'interférence aux signaux interférents émis par la station de base BS1 à destination du terminal T1 à l'aide des paramètres de transmission obtenus en décodant le canal PDCCH émis par la station de base BS1 sur la cellule C1.

Comme mentionné précédemment, la station de base BS1 est conforme à l'invention.

Dans le mode de réalisation décrit ici, elle dispose de l'architecture matérielle d'un ordinateur, telle qu'illustrée à la **figure 3****,** et comprend notamment un processeur 8, une mémoire morte 9, une mémoire vive 10, une mémoire non volatile 11 et des moyens de communication 12 sur le réseau NW de télécommunications LTE, connus en soi. Ces moyens de communication 12 lui permettent en particulier de communiquer d'une part avec les terminaux attachés à la cellule C1 et d'autre part avec les stations de base des cellules voisines, comme par exemple avec la station de base BS2 de la cellule C2.

La mémoire morte 9 de la station de base BS1 constitue un support d'enregistrement conforme à l'invention, lisible par le processeur 8 et sur lequel est enregistré un programme d'ordinateur comportant des instructions pour l'exécution des étapes d'un procédé de signalisation conforme à l'invention, dont les étapes seront décrites ultérieurement en référence à la figure 4 dans un mode particulier de réalisation.

Ce programme d'ordinateur définit, de façon équivalente, des modules logiciels et fonctionnels de la station de base aptes à exécuter les étapes du procédé de signalisation et à interagir avec les composants de la station de base BS1 décrits précédemment en référence à la figure 3, tels que notamment un module d'attribution, à un terminal interféreur (ex. T1) d'un identifiant temporaire RNTI ouvert, partagé par un nombre prédéterminé de terminaux interféreurs attachés à la cellule C1, et d'un code permettant d'identifier le terminal interféreur parmi la pluralité de terminaux interféreurs, un module de publication de cet identifiant temporaire de réseau ouvert auprès des terminaux de la cellule C1 et/ou des stations de base des cellules voisines (ex. BS2), un module d'envoi d'au moins un message de signalisation RRC au terminal interféreur comprenant l'identifiant temporaire de réseau ouvert et le code attribués au terminal interféreur, un module d'insertion du code dans un champ d'un canal physique PDCCH allouant des ressources de transmission au terminal interféreur, un module de codage du canal physique PDCCH à l'aide de l'identifiant RNTI ouvert attribué au terminal interféreur, et un module d'émission du canal physique PDCCH codé sur le réseau cellulaire NW.

Nous allons maintenant décrire en référence aux **figures 4 et 5****,** les principales étapes d'un procédé de signalisation et d'un procédé de communication conformes à l'invention, dans un mode particulier de réalisation dans lequel ces étapes sont mises en oeuvre respectivement par la station de base BS1 et par le terminal T1 de la figure 1.

Comme mentionné précédemment, on suppose que le terminal T1 est un terminal interféreur, autrement dit qu'il est susceptible d'interférer les communications établies par d'autres terminaux sur le réseau NW.

Par souci de simplification, on se limite à une interférence intercellulaire générée par les transmissions de la station de base BS1 vers le terminal T1 attaché à la cellule C1 sur les communications du terminal T2 attaché à la cellule C2. Le traitement de l'interférence de type MU-MIMO susceptible d'être générée par les transmissions destinées au terminal T1 sur les communications du terminal T1' attaché à la cellule C1 est abordé ultérieurement.

On suppose qu'au cours d'une étape préliminaire, la station de base BS1 sélectionne, parmi l'ensemble des identifiants temporaires RNTI disponibles pour la cellule C1, un sous-ensemble d'identifiants RNTI dits « ouverts », destinés à être publiés auprès des cellules voisines et des terminaux de la cellule C1 (étape E10 de la figure 4).

Dans le mode de réalisation décrit ici, le sous-ensemble sélectionné correspond à une plage comprenant un nombre limité d'identifiants RNTI contigus, par exemple, 1, 4, 8 ou 16 identifiants.

Conformément à l'invention chaque identifiant RNTI ouvert sélectionné est destiné à être partagé par un groupe de K terminaux identifiés comme interféreurs potentiels par la station de base BS1. K est un nombre prédéterminé, par exemple ici K=8.

Dans le mode de réalisation décrit ici, la station de base BS1 publie (i.e. diffuse) les identifiants RNTI ouverts sélectionnés, auprès des stations de base des cellules voisines de la cellule C1 et notamment auprès de la station de base BS2 (étape E20).

Comme mentionné précédemment, par publication on entend ici le fait de porter les identifiants temporaires RNTI ouverts à la connaissance des autres terminaux, autrement dit de les rendre publics, de sorte à faciliter le décodage par ces autres terminaux des canaux physiques PDCCH associés à ces identifiants (autrement dit, codés avec ces identifiants), et déterminer ainsi les paramètres de transmission alloués aux terminaux auxquels ces identifiants temporaires de réseau ouverts sont attribués, afin de supprimer l'interférence générée par ceux-ci.

Cette publication est réalisée par la station de base BS1 via l'envoi d'un message de signalisation contenant la liste des identifiants RNTI ouverts sélectionnés.

Ce message de signalisation peut être émis par la station de base BS1 à destination des stations de base des cellules voisines sur l'interface X2 du réseau LTE NW, moyennant la définition d'un nouveau message approprié. L'interface X2 est connue de l'homme du métier : son rôle est de permettre le transport de paquets de données et d'informations de contrôle entre les stations de base du réseau NW. Elle est définie notamment dans le document 3GPP 36.423.

En variante, la station de base BS1 peut émettre le message de signalisation contenant la liste des identifiants RNTI ouverts sélectionnés sur une liaison de type fibre point-à-point établie avec les stations de base des cellules voisines (et notamment avec la station de base BS2).

Dans un autre mode de réalisation dans lequel la station de base BS1 contrôle plusieurs cellules distinctes, la station de base BS1 transmet un message de signalisation contenant la liste des identifiants RNTI ouverts de la cellule C1, aux terminaux des cellules qu'elle contrôle et qui sont voisines de la cellule C1. A cet effet, la station de base BS1 s'appuie par exemple sur la signalisation gérée par la couche RRC de gestion des ressources radio du réseau. Cette couche RRC est définie notamment dans le document 3GPP TS 36.331 intitulé « Evolved Universal Terrestrial Radio Access (E-UTRA); Radio Resource Control (RRC); Protocol Specification », Release 11, décembre 2012. Le message de signalisation RRC envoyé par la station de base BS1 est émis sur un canal physique partagé PDSCH. De cette sorte, aucune interface réseau n'est nécessaire pour cette signalisation.

Il convient de noter que la sélection d'une plage d'identifiants RNTI ouverts contigus permet une signalisation spectralement plus efficace. En effet, pour signaler la liste des identifiants RNTI ouverts sélectionnés par la station de base BS1, il est suffisant que le message de signalisation émis par la station de base BS1 contienne un numéro indiquant le numéro du premier identifiant RNTI ouvert de la plage, et d'un nombre indiquant le nombre d'identifiants RNTI ouverts sélectionnés par la station de base BS1.

En variante, le message de signalisation émis par la station de base BS1 à destination des stations de base des cellules voisines contient chaque identifiant RNTI ouvert sélectionné par la station de base BS1 et codé sur 16 bits.

La liste des identifiants RNTI ouverts sélectionnés par la station de base BS1 est reçue par les stations de base des cellules voisines, et notamment par la station de base BS2.

La station de base BS2 (ainsi que les autres stations de base) publie alors à son tour la liste des identifiants RNTI ouverts sélectionnés par la station de base BS1, auprès des terminaux attachés à la cellule C2, dans un message de signalisation. Ce message de signalisation est par exemple un message de signalisation RRC émis par la station de base BS2 sur un canal physique partagé PDSCH.

Il convient de noter que dans l'exemple envisagé ici, on se limite à l'annulation de l'interférence intercellulaire de sorte que les identifiants RNTI ouverts ne sont signalés par la station de base BS1 qu'auprès des stations de base des cellules voisines. Toutefois, lorsqu'on envisage également l'annulation de l'interférence de type MU-MIMO générée au sein de la cellule C1, la station de base BS1 publie également les identifiants RNTI ouverts sélectionnés auprès des terminaux mobiles de sa cellule C1, par exemple via l'envoi d'un message de signalisation RRC.

Comme décrit précédemment, conformément au standard LTE, la station de base BS1 alloue également un identifiant temporaire RNTI dédié à chaque terminal attaché à sa cellule C1, (étape E30). Ainsi, dans l'exemple envisagé ici, elle alloue l'identifiant temporaire RNTI1 au terminal T1. Cet identifiant RNTI1 est, contrairement aux identifiants RNTI ouverts sélectionnés à l'étape E10, réservé au terminal T1, autrement dit, il identifie de manière unique le terminal T1 sur la cellule C1.

Il est envoyé par la station de base BS1 au terminal T1 dans un message de signalisation RRC (message de configuration au sens de l'invention), de façon connue de l'homme du métier, et est reçu par celui-ci (étape F10 de la figure 5).

Dès lors, la station de base BS1 peut envoyer au terminal T1 des canaux physiques PDCCH codés à l'aide de cet identifiant RNTI1, notamment pour lui signaler les paramètres de transmission qu'elle lui a alloués (incluant notamment le schéma de modulation et de codage, les blocs de ressource physiques PRB, la séquences pilote dédiée DMRS alloués), et le terminal T1 peut décoder les canaux physiques PDCCH qui lui sont destinés et sont encodés à l'aide de cet identifiant RNTI1 et utiliser les paramètres de transmission contenus dans ces canaux physiques PDCCH pour communiquer sur le réseau NW.

Le codage et le décodage des canaux physiques PDCCH à l'aide d'un identifiant RNTI ainsi que l'allocation des paramètres de transmission par la station de base BS1 au terminal T1 pour un réseau LTE sont décrits plus en détail dans les documents TS 36.212 et TS 36.213 cités précédemment et ne sont pas décrits davantage ici.

On suppose maintenant que la station de base BS1 détermine que le terminal T1 est susceptible de créer des interférences vers les cellules voisines (c'est-à-dire que les transmissions de la station de base BS1 à destination du terminal T1 sont susceptibles d'interférer les communications des terminaux des cellules voisines), et notamment vers les terminaux de la cellule BS2 (étape E40), par exemple parce que le terminal T1 demande un service consommateur de ressources radio pendant une durée assez longue (ex. service de diffusion d'un flux) et va donc occuper une large bande pendant un temps important. Autrement dit, elle détecte que le terminal T1 est un terminal interféreur au sens de l'invention.

En variante, d'autres critères peuvent être envisagés au niveau de la station de base BS1 pour détecter qu'un terminal est susceptible d'interférer les communications des terminaux des cellules voisines de la cellule C1 (ou même de la cellule C1), tels que par exemple le fait que le terminal soit en bordure de cellule, etc. De tels critères sont décrits notamment dans le document WO 2010/108136.

En variante, la station de base BS1 peut détecter qu'un terminal est susceptible d'interférer les communications des terminaux des cellules voisines de la cellule C1 grâce à un échange d'informations avec les stations de base contrôlant ces cellules voisines. Cette détection peut s'effectuer à chaque TTI lorsque les stations de base communiquent par une liaison de type fibre point-à-point. Par exemple, la station de base voisine BS2 peut informer la station de base BS1 de l'utilisation prévue de certaines ressources radio par le terminal T2 dans un TTI futur, de sorte que la station de base BS1 sait que si elle utilise ces ressources pour le terminal T1 lors de ce TTI futur, la transmission vers le terminal T1 créera de l'interférence intercellulaire pour le terminal T2.

Suite à cette détection, la station de base BS1 attribue au terminal T1 un identifiant RNTI ouvert, noté RNTIo1, parmi les identifiants RNTI ouverts sélectionnés à l'étape E10, et diffusés auprès des stations de base des cellules voisines à la cellule C1 (étape E50). Dans le mode de réalisation décrit ici, cet identifiant RNTIo1 est attribué au terminal T1 en plus de son identifiant temporaire dédié RNTI1.

Cet identifiant RNTIo1 pouvant être partagé conformément à l'invention par plusieurs terminaux interféreurs, la station de base BS1 attribue également au terminal T1, au cours de cette étape E50, un code additionnel discriminant COD1, afin de pouvoir identifier le terminal T1 parmi la pluralité de terminaux interféreurs partageant l'identifiant RNTIo1 ouvert.

Le code additionnel COD1 est par exemple un code comprenant log₂(K) bits (soit 3 bits dans l'exemple envisagé précédemment où K=8 terminaux interféreurs partagent le même identifiant temporaire ouvert). Par exemple, COD1=001.

Puis la station de base BS1 envoie sur le canal PDSCH un message de configuration dédié au terminal T1 contenant d'une part l'identifiant RNTIo1 ouvert et d'autre part le code additionnel COD1= « 001 » de 3 bits qui lui ont été attribués (étape E60). Ce message de configuration est ici un message de signalisation RRC géré par la couche RRC de gestion des ressources radio du réseau.

Ce message de configuration RRC est reçu par le terminal T1 (étape F20 de la figure 5). Dès lors, le terminal T1 doit surveiller d'une part l'espace de recherche correspondant à son identifiant RNTI1 dédié, et d'autre part, l'espace de recherche correspondant à son identifiant RNTIo1 ouvert : autrement dit, il doit décoder tous les canaux PDCCH émis par la station de base BS1 et codés soit avec l'identifiant dédié RNTI1, soit avec l'identifiant ouvert RNTIo1. Toutefois, il convient de noter que seuls les canaux PDCCH contenant le code additionnel COD1 sont destinés au terminal T1.

Une fois l'identifiant ouvert partagé RNTIo1 et le code COD1 signalés au terminal T1, la station de base peut informer le terminal T1 des paramètres de transmission (et de façon équivalente, des ressources du réseau) qu'elle lui alloue (notamment les schémas de modulation et de codage MCS et les blocs PRB), dans un canal physique PDCCH codé avec l'identifiant ouvert RNTIo1 et transmis sur l'espace de recherche associé à cet identifiant ouvert RNTIo1.

Pour permettre au terminal T1 de détecter qu'un tel canal PDCCH allouant des ressources de transmission sur le réseau NW lui est destiné, la station de base BS1 insert conformément à l'invention, dans ce canal PDCCH codé à l'aide de l'identifiant ouvert RNTIo1, le code additionnel COD1 dans un champ du format de DCI du canal PDCCH (étape E70).

A cet effet, le code COD1 peut être inséré dans un champ inutilisé du format de DCI si un tel champ existe.

Par exemple, si un seul bloc de transport, au lieu des deux autorisés par le standard, est transmis par le terminal T1, le champ « Schéma de modulation et codage (modulation and coding scheme ou encore MCS) » du format de DCI 2, 2A, 2B, 2C ou 2D défini dans le document 3GPP TS 36.212 correspondant au deuxième schéma MCS de modulation et de codage normalement destiné au second bloc de transport peut être utilisé pour insérer le code COD1. Selon une telle hypothèse, on doit bien entendu s'assurer que la dimension du code COD1 est compatible avec la taille de ce champ.

En variante, on peut envisager d'ajouter un champ aux différents formats de DCI pouvant être utilisés pour le canal PDCCH (champ non prévu dans l'état actuel de la norme LTE), dont la taille dépend du nombre maximal de terminaux interféreurs pouvant partager un même identifiant ouvert.

On comprend bien dès lors que le nombre K de terminaux interféreurs pouvant partager un même identifiant ouvert résulte d'un compromis entre complexité, ressources de signalisation nécessaires, et performances des techniques d'annulation d'interférence, tout en s'assurant que ce nombre est compatible avec la définition du format de DCI pouvant être utilisé pour les canaux physiques PDCCH.

On note que les canaux PDCCH associés aux identifiants RNTI ouverts étant destinés à être décodés par des terminaux interférés (par exemple par le terminal T2) en mauvaises conditions radio du point de vue de la cellule C1 (puisqu'ils sont servis par une autre cellule C2), ont généralement besoin d'une forte protection. Ceci se traduit par l'utilisation d'un facteur d'agrégation élevé pour former ces canaux, ce qui signifie qu'on forme préférentiellement chaque canal PDCCH destiné à un identifiant RNTI ouvert avec un nombre élevé d'éléments ou CCE (pour « Control Channel Element ») (dans un réseau LTE, selon le niveau de protection du canal PDCCH envisagé, un canal PDCCH peut généralement être formé de 1, 2, 4 ou 8 CCE). Le nombre de combinaisons de ressources candidates à tester lors de la recherche des canaux PDCCH par le terminal T2, qui dépend de ce facteur d'agrégation, est par conséquent relativement réduit. La complexité additionnelle liée à l'invention peut par conséquent être limitée.

On peut en outre délibérément réduire le nombre de formats de DCI éligibles à être transmis selon un identifiant RNTI ouvert, afin de limiter la complexité de la recherche des canaux PDCCH réalisée par les terminaux interférés. Un léger accroissement de la complexité de recherche peut toutefois être toléré pour les terminaux capables d'effectuer une réception MMSE-SIC, car ces derniers sont dotés d'une capacité de calcul supérieure. Afin que cet accroissement de complexité ne nuise cependant pas aux autres terminaux, on peut n'utiliser des identifiants RNTI ouverts que pour les terminaux capables de mettre en oeuvre une annulation d'interférences selon une technique MMSE-SIC.

Le terminal T1 surveille à chaque intervalle de temps de transmission (TTI) l'espace de recherche correspondant à l'identifiant RNTIo1 ouvert (en plus de l'espace de recherche correspondant à son identifiant dédié RNTI1).

Plus précisément, sur réception d'un canal de contrôle PDCCH sur l'espace de recherche correspondant à l'identifiant RNTIo1 ouvert (étape F30), le terminal T1 décode ce canal de contrôle PDCCH à l'aide de l'identifiant RNTIo1, de façon connue en soi (étape F40).

Puis le terminal T1 vérifie si le code COD1 est présent dans le canal PDCCH ainsi décodé (étape test F50), dans le champ du format de DCI prévu à cet effet.

Si le code COD1 n'est pas présent dans ce champ (réponse non à l'étape test F50), cela signifie que le canal PDCCH reçu n'est pas destiné au terminal T1. Le terminal T1 ne prend donc pas en compte les informations contenues dans le canal PDCCH (et notamment les paramètres de transmission inclus dans ce canal) (étape F60).

En revanche, si le code COD1 est présent dans ce champ (réponse oui à l'étape test F50), cela signifie que le canal PDCCH reçu est destiné au terminal T1. Celui-ci extrait les paramètres de transmission contenus dans le canal.

Il utilise dès lors les ressources désignées par ces paramètres de transmission lors de ses communications sur le réseau NW (étape F70).

On suppose que dans le même temps (i.e. dans le même TTI), la cellule C2 sert le terminal T2, apte à mettre en oeuvre un récepteur MMSE-SIC comme décrit précédemment.

Le terminal T2 a par ailleurs été informé par la station de base BS2 de la liste des identifiants ouverts (contenant notamment l'identifiant ouvert RNTIo1) sélectionnés par la station de base BS1 et destinés aux terminaux interféreurs de la cellule C1 susceptibles d'interférer les communications d'autres terminaux (dont notamment ceux de la cellule C2).

Le terminal T2 décode, à l'aide de son identifiant temporaire dédié RNTI2 (alloué par la station de base BS2 de façon connue en soi), les canaux PDCCH qui lui sont transmis dans ce TTI sur l'espace de recherche associé à cet identifiant. Le terminal T2, détectant que des données lui sont destinées dans ce TTI, tente de décoder les canaux PDCCH éventuellement transmis par la station de base BS1 sur les espaces de recherche correspondant aux identifiants ouverts dont il a été informé, et notamment sur l'espace de recherche correspondant à l'identifiant RNTIo1.

Le cas échéant (i.e. s'il détecte et décode un canal PDCCH associé à l'identifiant ouvert RNTIo1), ce décodage permet avantageusement au terminal T2 d'identifier les paramètres de transmission alloués au terminal T1 sur ce TTI, et de déterminer si les ressources utilisées par le terminal T1 pour communiquer sur le réseau NW déduites de ces paramètres coïncident ou correspondent (en partie seulement ou totalement), avec les ressources qu'il utilise lui-même pour communiquer. Ce décodage permet au terminal T2 de déterminer si le terminal T1 est un interféreur et s'il doit tenter d'annuler l'interférence générée par T1 à l'aide de son récepteur MMSE-SIC, en prenant en compte les paramètres de transmission alloués au terminal T1 pour ce même TTI.

Le cas échéant, le terminal T2 peut alors, grâce à la connaissance de ces paramètres de transmission, décoder le signal interférent du terminal T1 avec succès puis annuler l'interférence correspondante ce qui permet d'améliorer la qualité de son lien radio pour la détection du signal utile qui lui est destiné.

Autrement dit, l'invention facilite l'application de techniques d'annulation d'interférence dans le cas où une interférence intercellulaire existe entre deux terminaux, et ce, moyennant une complexité en termes de signalisation raisonnable.

Il convient de noter que le champ du format de DCI contenant le code COD1 n'a pas d'importance pour le terminal T2 car il n'intervient pas dans la capacité de décodage du canal PDCCH par le terminal T2 ni dans la spécification des paramètres de transmission du terminal T1 à qui ce PDCCH est destiné.

Par ailleurs, afin d'améliorer les performances du système 1 et de l'annulation d'interférence, on peut mettre en oeuvre une coordination préalable entre les stations de base BS1 et BS2 afin de s'assurer que le schéma de codage et de modulation du terminal T1 soit décodable par le terminal T2 (lors de l'application de la méthode d'annulation d'interférence), et que le débit offert au terminal T2 tient compte des performances améliorées du terminal T2 du fait de l'annulation de l'interférence via la connaissance des paramètres de transmission alloués à T1 aisément permise par l'invention. Le terminal T2 peut ainsi recevoir un meilleur débit instantané sur ce TTI que s'il n'avait pu mettre en oeuvre qu'un récepteur linéaire.

On notera que tous les terminaux de la cellule C1 ne consomment pas forcément suffisamment de ressources pour générer des interférences dommageables aux communications du terminal T2, et donc qu'il est pertinent d'annuler. En effet, si le terminal T2 est servi sur un nombre élevé de blocs de ressources PRB (par exemple 25) mais n'est interféré que par la transmission d'un bloc de ressources PRB de la cellule C1 vers le terminal T1, cette interférence est peu dommageable et ne mérite pas nécessairement d'appliquer un récepteur MMSE-SIC pour la réduire. Les terminaux qui n'ont pas besoin de recevoir un canal PDCCH décodable par d'autres terminaux peuvent être servis en permanence sur leur identifiant RNTI dédié. Ces terminaux peuvent être avantageusement configurés pour ne pas avoir à rechercher leur canal PDCCH selon des identifiants temporaires de réseau ouverts, ce qui permet d'économiser leur consommation de batterie.

Comme mentionné précédemment, l'exemple illustré en référence aux figures 1-5 concerne l'annulation d'interférences intercellulaires entre deux terminaux T1 et T2 servis par des stations de base BS1 et BS2 contrôlant des cellules voisines distinctes C1 et C2. Toutefois, l'invention s'applique également dans un contexte où l'on cherche à annuler une interférence de type MU-MIMO générée au sein d'une même cellule (par exemple par les communications du terminal T1 sur les communications du terminal T1'). Des étapes similaires à celles décrites précédemment pour l'annulation d'interférence intercellulaire peuvent alors être mises en oeuvre, moyennant la publication de la liste des identifiants RNTI ouverts auprès des terminaux attachés à la cellule C1 (comme par exemple auprès du terminal T1').

De même, l'invention s'applique également dans un contexte où à la fois une interférence intercellulaire et une interférence MU-MIMO doivent être annulées.

## Revendications

1. Procédé de signalisation, destiné à être mis en oeuvre par une station de base (BS1) d'un réseau de télécommunications cellulaire (NW), cette station de base contrôlant au moins une cellule (C1) du réseau, le procédé de signalisation comprenant :
- une étape d'attribution (E60), à un terminal interféreur (T1) attaché à ladite cellule (C1) et identifié par la station de base (BS1) comme étant susceptible d'interférer au moins une communication établie par un autre terminal (T1',T2) attaché à ladite cellule (C1) ou à une cellule voisine (C2) :
o d'un identifiant temporaire de réseau dit ouvert (RNTIo1), destiné à être partagé par un nombre prédéterminé de terminaux interféreurs attachés à la cellule (C1) contrôlé par la station de base (BS1) ; ledit procédé **caractérisé en ce que** la dite étape d'attribution comprends en outre l'attribution
o d'un code (COD1) permettant d'identifier le terminal interféreur (T1) parmi ce nombre prédéterminé de terminaux interféreurs ; et **en ce que** ledit procédé comprends en outre:
- une étape de publication (E20) de cet identifiant temporaire de réseau ouvert auprès des terminaux attachés à ladite cellule et/ou à au moins une autre cellule contrôlée par la station de base et voisine de ladite cellule et/ou auprès d'au moins une station de base contrôlant une cellule voisine de ladite cellule ;
- une étape d'envoi (E70) au terminal interféreur (T1), dans au moins un message de configuration, de l'identifiant temporaire de réseau ouvert (RNTIo1) et du code (COD1) qui lui sont attribués ; et
- une étape d'insertion (E80) de ce code, dans un champ d'un canal physique de contrôle destiné au terminal interféreur et allouant des ressources de transmission sur le réseau cellulaire au terminal interféreur, ce canal physique étant codé à l'aide de l'identifiant temporaire de réseau ouvert attribué au terminal interféreur et émis sur le réseau (NW).

2. Procédé de signalisation selon la revendication 1 dans lequel, au cours de l'étape d'envoi (E70), le message de configuration est un message de signalisation géré par une couche de gestion des ressources radio du réseau.

3. Procédé de signalisation selon la revendication 1 ou 2 dans lequel l'étape de publication (E20) de l'identifiant temporaire de réseau ouvert comprend la diffusion de cet identifiant auprès des terminaux (T1') attachés à la cellule (C1) contrôlée par la station de base.

4. Procédé de signalisation selon l'une quelconque des revendications 1 à 3 dans lequel l'étape de publication (E20) de l'identifiant temporaire de réseau ouvert comprend la diffusion de cet identifiant auprès des terminaux attachés à au moins une autre cellule contrôlée par la station de base (BS1) et voisine de la cellule (C1).

5. Procédé de signalisation selon l'une quelconque des revendications 1 à 4 dans lequel l'étape de publication (E20) de l'identifiant temporaire de réseau ouvert comprend la diffusion de cet identifiant auprès d'au moins une station de base (BS2) contrôlant une cellule voisine (C2) de la cellule.

6. Procédé de signalisation selon l'une quelconque des revendications 1 à 5 dans lequel le réseau de télécommunications cellulaire (NW) est un réseau LTE (Long Term Evolution) et :
- l'identifiant temporaire de réseau ouvert (RNTIo) est un identifiant RNTI (Radio Network Temporary Identifier) ouvert ;
- le canal physique de contrôle est un canal PDCCH (Physical Downlink Control CHannel) ; et
- le message de configuration est un message de signalisation RRC (Radio Resource Control).

7. Procédé de signalisation selon la revendication 6 dans lequel, à l'étape d'insertion, le code (COD1) est inséré dans un champ d'un format de DCI (Downlink Control Information) tel que défini dans le document 3GPP TS 36.212.

8. Procédé de signalisation selon la revendication 7 dans lequel ledit champ est un champ « Schéma de modulation et codage (modulation and coding scheme) », d'un format de DCI 2, 2A, 2B, 2C ou 2D.

9. Procédé de signalisation selon l'une quelconque des revendications 1 à 8 comprenant en outre une étape d'attribution (E30) au terminal interféreur d'un identifiant temporaire de réseau dédié réservé à ce terminal interféreur et l'identifiant de manière unique sur la cellule (C1) du réseau à laquelle il est attaché.

10. Programme d'ordinateur comportant des instructions pour l'exécution des étapes du procédé de signalisation selon l'une quelconque des revendications 1 à 9 lorsque ledit programme est exécuté par un ordinateur.

11. Support d'enregistrement lisible par un ordinateur sur lequel est enregistré un programme d'ordinateur selon la revendication 10.

12. Station de base (BS1) d'un réseau de télécommunications cellulaire (NW), ladite station de base contrôlant au moins une cellule (C1) du réseau et comprenant :
- un module d'attribution, à un terminal interféreur (T1) attaché à ladite cellule et identifié comme étant susceptible d'interférer au moins une communication établie par un autre terminal attaché à ladite cellule ou à une cellule voisine :
o d'un identifiant temporaire de réseau dit ouvert (RNTIo1), destiné à être partagé par un nombre prédéterminé de terminaux interféreurs attachés à la cellule contrôlée par la station de base ; ladite station de base **caractérisée en ce que** ledit module d'attribution est en outre apte à attribuer
∘ un code (COD1) permettant d'identifier le terminal interféreur parmi ce nombre prédéterminé de terminaux interféreurs, et **en ce que** ladite station de base comprends en outre:
- un module de publication de cet identifiant temporaire de réseau ouvert pour publication auprès des terminaux attachés à ladite cellule et/ou à au moins une autre cellule contrôlée par la station de base et voisine de ladite cellule et/ou auprès d'au moins une station de base contrôlant une cellule voisine de ladite cellule;
- un module d'envoi au terminal interféreur, dans au moins un message de configuration, de l'identifiant temporaire de réseau ouvert et du code attribués au terminal interféreur ;
- un module d'insertion de ce code, dans un champ d'un canal physique de contrôle destiné au terminal interféreur et allouant des ressources de transmission sur le réseau cellulaire au terminal interféreur ;
- un module de codage de ce canal physique à l'aide de l'identifiant temporaire de réseau ouvert attribué au terminal interféreur ; et
- un module d'émission de ce canal physique sur le réseau cellulaire.

13. Procédé de communication, destiné à être mis en oeuvre par un terminal interféreur (T1) attaché à une cellule (C1) d'un réseau de télécommunications cellulaire (NW), cette cellule étant contrôlée par une station de base (BS1), le terminal interféreur étant susceptible d'interférer au moins une communication établie par un autre terminal de ladite cellule ou d'une cellule voisine à cette cellule, le procédé de communication comprenant :
- une étape de réception (F20), d'au moins un message de configuration en provenance de la station de base (BS1), comprenant un identifiant temporaire de réseau dit ouvert (RNTIo1) publié ou destiné à être publié par la station de base et un code (COD1) attribués au terminal interféreur ;
- une étape de décodage (F40) d'un canal physique de contrôle allouant des ressources de transmission sur le réseau cellulaire à l'aide de cet identifiant temporaire de réseau ouvert ;
- une étape de vérification (F50) de la présence du code attribué au terminal interféreur dans le canal physique décodé ; et
- si le code est présent dans le canal physique décodé, une étape d'utilisation (F70) des ressources de transmission allouées dans ce canal destiné au terminal interféreur pour communiquer sur le réseau cellulaire.

14. Terminal (T1) attaché à une cellule (C1) d'un réseau de télécommunications cellulaire (NW), ladite cellule étant contrôlée par une station de base (BS1), ledit terminal étant susceptible d'interférer au moins une communication établie par un autre terminal attaché à ladite cellule (C1) et/ou à une cellule voisine (C2) à ladite cellule, et comprenant :
- un module de réception, d'au moins un message de configuration en provenance de la station de base (BS1), comprenant un identifiant temporaire de réseau dit ouvert (RNTIo1) publié ou destiné à être publié par la station de base et d'un code (COD1) attribués au terminal (T1) ;
- un module de décodage d'un canal physique de contrôle allouant des ressources de transmission sur le réseau cellulaire à l'aide de cet identifiant temporaire de réseau ouvert ;
- un module de vérification de la présence du code (COD1) attribué au terminal dans le canal physique décodé ; et
- un module, activé si le code est présent dans le canal physique décodé, d'utilisation des ressources de transmission allouées dans ce canal destiné au terminal interféreur pour communiquer sur le réseau cellulaire.

15. Système (1) d'un réseau de télécommunications cellulaire (NW) comprenant :
- une station de base (BS1) selon la revendication 12 contrôlant au moins une cellule du réseau de télécommunications cellulaire ;
- un terminal interféreur (T1) selon la revendication 14 attaché à cette cellule ; et
- un terminal interféré (T2,T1') par une transmission de la station de base (BS1) vers ledit terminal interféreur, ledit terminal interféré étant attaché à la cellule (C1) du terminal interféreur ou à une cellule (C2) du réseau voisine de cette cellule, et étant apte à mettre en oeuvre une technique d'annulation d'interférence à l'aide de l'identifiant temporaire de réseau ouvert alloué au terminal interféreur et publié par la station de base (BS1).

## Patentansprüche

1. Signalisierungsverfahren, das dazu bestimmt ist, von einer Basisstation (BS1) eines zellularen Telekommunikationsnetzwerks (NW) angewendet zu werden, wobei diese Basisstation mindestens eine Zelle (C1) des Netzes steuert, wobei das Signalisierungsverfahren enthält:
- einen Zuweisungsschritt (E60), zu einem interferierenden Endgerät (T1), das mit der Zelle (C1) verknüpft ist und von der Basisstation (BS1) als möglicherweise mindestens eine Kommunikation interferierend erkannt wird, die von einem anderen Endgerät (T1', T2) aufgebaut wird, das mit der Zelle (C1) oder einer benachbarten Zelle (C2) verknüpft ist:
o einer so genannten temporären offenen Netzkennung (RNTIo1), die dazu bestimmt ist, von einer vorbestimmten Anzahl von interferierenden Endgeräten geteilt zu werden, die mit der von der Basisstation (BS1) gesteuerten Zelle (C1) verknüpft sind;
wobei das Verfahren **dadurch gekennzeichnet ist, dass** der Zuweisungsschritt außerdem die Zuweisung
o eines Codes (COD1) enthält, der es ermöglicht, das interferierende Endgerät (T1) unter dieser vorbestimmten Anzahl von interferierenden Endgeräten zu erkennen;
und dass das Verfahren außerdem enthält:
- einen Veröffentlichungsschritt (E20) dieser temporären offenen Netzkennung bei den mit der Zelle und/oder mindestens einer anderen Zelle, die von der Basisstation gesteuert wird und der Zelle benachbart ist, verknüpften Endgeräten und/oder bei mindestens einer Basisstation, die eine der Zelle benachbarte Zelle steuert;
- einen Sendeschritt (E70) an das interferierende Endgerät (T1), in mindestens einer Konfigurationsmitteilung, der temporären offenen Netzkennung (RNTIo1) und des Codes (COD1), die ihm zugewiesen sind; und
- einen Einfügungsschritt (E80) dieses Codes in ein Feld eines physikalischen Steuerkanals, der für das interferierende Endgerät bestimmt ist und Übertragungsressourcen im zellulären Netz zum interferierenden Endgerät zuteilt, wobei dieser physikalische Kanal mit Hilfe der temporären offenen Netzkennung codiert wird, die dem interferierenden Endgerät zugewiesen und im Netz (NW) gesendet wird.

2. Signalisierungsverfahren nach Anspruch 1, wobei, während des Sendeschritts (E70), die Konfigurationsmitteilung eine Signalisierungsmitteilung ist, die von einer Verwaltungsschicht der Funkressourcen des Netzes verwaltet wird.

3. Signalisierungsverfahren nach Anspruch 1 oder 2, wobei der Veröffentlichungsschritt (E20) der temporären offenen Netzkennung die Verbreitung dieser Kennung bei den Endgeräten (T1') enthält, die mit der von der Basisstation gesteuerten Zelle (C1) verknüpft sind.

4. Signalisierungsverfahren nach einem der Ansprüche 1 bis 3, wobei der Veröffentlichungsschritt (E20) der temporären offenen Netzkennung die Verbreitung dieser Kennung bei den Endgeräten enthält, die mit mindestens einer anderen von der Basisstation (BS1) gesteuerten und der Zelle (C1) benachbarten Zelle verknüpft sind.

5. Signalisierungsverfahren nach einem der Ansprüche 1 bis 4, wobei der Veröffentlichungsschritt (E20) der temporären offenen Netzkennung die Verbreitung dieser Kennung bei mindestens einer Basisstation (BS2) enthält, die eine der Zelle benachbarte Zelle (C2) steuert.

6. Signalisierungsverfahren nach einem der Ansprüche 1 bis 5, wobei das zellulare Telekommunikationsnetzwerk (NW) ein LTE-Netzwerk (Long Term Evolution) ist und:
- die temporäre offene Netzkennung (RNTIo) eine offene RNTI-Kennung (Radio Network Temporary Identifier) ist;
- der physikalische Steuerkanal ein PDCCH-Kanal (Physical Downlink Control CHannel) ist; und
- die Konfigurationsmitteilung eine RRC-Signalisierungsmitteilung (Radio Resource Control) ist.

7. Signalisierungsverfahren nach Anspruch 6, wobei, im Einfügungsschritt, der Code (COD1) in ein Feld eines DCI-Formats (Downlink Control Information) eingefügt wird, wie es in der Druckschrift 3GPP TS 36.212 definiert ist.

8. Signalisierungsverfahren nach Anspruch 7, wobei das Feld ein Feld « Modulations- und Codierschema (modulation and coding scheme) » eines DCI-Formats 2, 2A, 2B, 2C oder 2D ist.

9. Signalisierungsverfahren nach einem der Ansprüche 1 bis 8, das außerdem einen Schritt der Zuweisung (E30) zum interferierenden Endgerät einer dedizierten temporären Netzkennung enthält, die für dieses interferierende Endgerät reserviert ist und es in der Zelle (C1) des Netzes eindeutig erkennt, mit der es verknüpft ist.

10. Computerprogramm, das Anweisungen zur Ausführung der Schritte des Signalisierungsverfahrens nach einem der Ansprüche 1 bis 9 aufweist, wenn das Programm von einem Computer ausgeführt wird.

11. Computerlesbarer Aufzeichnungsträger, auf dem ein Computerprogramm nach Anspruch 10 aufgezeichnet ist.

12. Basisstation (BS1) eines zellularen Telekommunikationsnetzwerks (NW), wobei die Basisstation mindestens eine Zelle (C1) des Netzes steuert und enthält:
- ein Zuweisungsmodul, zu einem interferierenden Endgerät (T1), das mit der Zelle verknüpft ist und als möglicherweise mindestens eine Kommunikation interferierend erkannt wird, die von einem anderen mit der Zelle oder einer benachbarten Zelle verknüpften Endgerät aufgebaut wird:
o einer so genannten temporären offenen Netzkennung (RNTIo1), die dazu bestimmt ist, von einer vorbestimmten Anzahl von interferierenden Endgeräten geteilt zu werden, die mit der von der Basisstation gesteuerten Zelle verknüpft sind;
wobei die Basisstation **dadurch gekennzeichnet ist, dass** das Zuweisungsmodul außerdem fähig ist, einen Code (COD1) zuzuweisen, der es ermöglicht, das interferierende Endgerät unter dieser vorbestimmten Anzahl von interferierenden Endgeräten zu erkennen, und dass die Basisstation außerdem enthält:
- ein Veröffentlichungsmodul dieser temporären offenen Netzkennung zur Veröffentlichung bei mit der Zelle und/oder mit mindestens einer anderen Zelle, die von der Basisstation gesteuert wird und der Zelle benachbart ist, verknüpften Endgeräten und/oder bei mindestens einer Basisstation, die eine der Zelle benachbarte Zelle steuert;
- ein Sendemodul an das interferierende Endgerät, in mindestens einer Konfigurationsmitteilung, der temporären offenen Netzkennung und des Codes, die dem interferierenden Endgerät zugewiesen sind;
- ein Einfügungsmodul dieses Codes, in ein Feld eines physikalischen Steuerkanals, der für das interferierende Endgerät bestimmt ist und Übertragungsressourcen im zellularen Netz dem interferierenden Endgerät zuteilt;
- ein Codiermodul dieses physikalischen Kanals mit Hilfe der temporären offenen Netzkennung, die dem interferierenden Endgerät zugewiesen ist, und
- ein Sendemodul dieses physikalischen Kanals im zellulären Netz.

13. Kommunikationsverfahren, dazu bestimmt, von einem mit einer Zelle (C1) eines zellularen Telekommunikationsnetzwerks (NW) verknüpften interferierenden Endgerät (T1) angewendet zu werden, wobei diese Zelle von einer Basisstation (BS1) gesteuert wird, wobei das interferierende Endgerät mindestens eine Kommunikation interferieren kann, die von einem anderen Endgerät der Zelle oder einer dieser Zelle benachbarten Zelle aufgebaut wird, wobei das Kommunikationsverfahren enthält:
- einen Empfangsschritt (F20) mindestens einer Konfigurationsmitteilung von der Basisstation (BS1), die eine temporäre Kennung eines so genannten offenen Netzes (RNTIo1), die von der Basisstation veröffentlicht wird oder dazu bestimmt ist, von ihr veröffentlicht zu werden, und einen Code (COD1) enthält, die dem interferierenden Endgerät zugeordnet sind;
- einen Decodierschritt (F40) eines physikalischen Steuerkanals, der Übertragungsressourcen im zellularen Netz mit Hilfe dieser temporären offenen Netzkennung zuteilt;
- einen Überprüfungsschritt (F50) des Vorhandenseins des dem interferierenden Endgerät zugewiesenen Codes im decodierten physikalischen Kanal; und
- wenn der Code im decodierten physikalischen Kanal vorhanden ist, einen Benutzungsschritt (F70) der in diesem für das interferierende Endgerät bestimmten Kanal zugeteilten Übertragungsressourcen, um im zellularen Netz zu kommunizieren.

14. Endgerät (T1), das mit einer Zelle (C1) eines zellularen Telekommunikationsnetzwerks (NW) verknüpft ist, wobei die Zelle von einer Basisstation (BS1) gesteuert wird, wobei das Endgerät mindestens eine Kommunikation interferieren kann, die von einem anderen Endgerät aufgebaut wird, das mit der Zelle (C1) und/oder einer der Zelle benachbarten Zelle (C2) verknüpft ist, und das enthält:
- ein Empfangsmodul mindestens einer Konfigurationsmitteilung von der Basisstation (BS1), die eine temporäre Kennung eines so genannten offenen Netzes (RNTIo1) enthält, die von der Basisstation veröffentlicht wird oder dazu bestimmt ist, von ihr veröffentlicht zu werden, und eines Codes (COD1), die dem Endgerät (T1) zugewiesen sind;
- ein Decodiermodul eines physikalischen Steuerkanals, der Übertragungsressourcen im zellularen Netz mit Hilfe dieser temporären offenen Netzkennung zuteilt;
- ein Überprüfungsmodul des Vorhandenseins des Codes (COD1), der dem Endgerät im decodierten physikalischen Kanal zugewiesen ist; und
- ein Modul, das aktiviert wird, wenn der Code im decodierten physikalischen Kanal vorhanden ist, der Verwendung der in diesem für das interferierende Endgerät bestimmten Kanal zugeteilten Übertragungsressourcen, um im zellularen Netz zu kommunizieren.

15. System (1) eines zellularen Telekommunikationsnetzwerks (NW), das enthält:
- eine Basisstation (BS1) nach Anspruch 12, die mindestens eine Zelle des zellularen Telekommunikationsnetzwerks steuert;
- ein mit dieser Zelle verknüpftes interferierendes Endgerät (T1) nach Anspruch 14; und
- ein von einer Übertragung der Basisstation (BS1) zum interferierenden Endgerät interferiertes Endgerät (T2, T1'), wobei das interferierte Endgerät mit der Zelle (C1) des interferierenden Endgeräts oder mit einer dieser Zelle benachbarten Zelle (C2) des Netzes verknüpft ist, und das eine Technik der Interferenzaufhebung mit Hilfe der temporären offenen Netzkennung anwenden kann, die dem interferierenden Endgerät zugeteilt ist und von der Basisstation (BS1) veröffentlicht wird.

## Claims

1. Signalling method, intended to be implemented by a base station (BS1) of a cellular telecommunications network (NW), this base station controlling at least one cell (C1) of the network, the signalling method comprising:
- a step of assignment (E60), to an interfering terminal (T1) attached to said cell (C1) and identified by the base station (BS1) as being likely to interfere with at least one communication set up by another terminal (T1', T2) attached to said cell (C1) or to a neighbouring cell (C2):
∘ of a so-called open network temporary identifier (RNTIo1), intended to be shared by a predetermined number of interfering terminals attached to the cell (C1) controlled by the base station (BS1);
said method **characterized in that** said assignment step further comprises the assignment
∘ of a code (COD1) making it possible to identify the interfering terminal (T1) out of this predetermined number of interfering terminals;
and **in that** said method further comprises:
- a step of publication (E20) of this open network temporary identifier to the terminals attached to said cell and/or to at least one other cell controlled by the base station and neighbouring said cell and/or to at least one base station controlling a cell neighbouring said cell;
- a step of sending (E70) to the interfering terminal (T1), in at least one configuration message, of the open network temporary identifier (RNTIo1) and of the code (COD1) which are assigned to it; and
- a step of insertion (E80) of this code, into a field of a physical control channel intended for the interfering terminal and allocating transmission resources on the cellular network to the interfering terminal, this physical channel being coded using the open network temporary identifier assigned to the interfering terminal and transmitted over the network (NW).

2. Signalling method according to Claim 1, in which, during the sending step (E70), the configuration message is a signalling message managed by a layer managing radio resources of the network.

3. Signalling method according to Claim 1 or 2, in which the step of publication (E20) of the open network temporary identifier comprises the broadcasting of this identifier to terminals (T1') attached to the cell (C1) controlled by the base station.

4. Signalling method according to any one of Claims 1 to 3, in which the step of publication (E20) of the open network temporary identifier comprises the broadcasting of this identifier to terminals attached to at least one other cell controlled by the base station (BS1) and neighbouring the cell (C1).

5. Signalling method according to any one of Claims 1 to 4, in which the step of publication (E20) of the open network temporary identifier comprises the broadcasting of this identifier to at least one base station (BS2) controlling a cell (C2) neighbouring the cell.

6. Signalling method according to any one of Claims 1 to 5, in which the cellular telecommunications network (NW) is an LTE (Long Term Evolution) network and:
- the open network temporary identifier (RNTIo) is an open radio network temporary identifier RNTI;
- the physical control channel is a PDCCH channel (Physical Downlink Control CHannel); and
- the configuration message is an RRC (Radio Resource Control) signalling message.

7. Signalling method according to Claim 6, in which, in the insertion step, the code (COD1) is inserted into a field of a DCI (Downlink Control Information) format as defined in the document 3GPP TS 36.212.

8. Signalling method according to Claim 7, in which said field is a "modulation and coding scheme" field, of a DCI 2, 2A, 2B, 2C or 2D format.

9. Signalling method according to any one of Claims 1 to 8, further comprising a step of assignment (E30) to the interfering terminal of a dedicated network temporary identifier reserved for this interfering terminal and identifying it uniquely on the cell (C1) of the network to which it is attached.

10. Computer program comprising instructions for executing the steps of the signalling method according to any one of Claims 1 to 9 when said program is run by a computer.

11. Computer-readable storage medium on which is stored a computer program according to Claim 10.

12. Base station (BS1) of a cellular telecommunications network (NW), said base station controlling at least one cell (C1) of the network and comprising:
- a module for assigning, to an interfering terminal (T1) attached to said cell and identified as being likely to interfere with at least one communication set up by another terminal attached to said cell or to a neighbouring cell;
∘ a so-called open network temporary identifier (RNTIo1), intended to be shared by a predetermined number of interfering terminals attached to the cell controlled by the base station;
said base station **characterized in that** said assignment module is further able to assign
∘ a code (COD1) making it possible to identify the interfering terminal out of this predetermined number of interfering terminals,
and **in that** said base station further comprises:
- a module for publishing this open network temporary identifier for publication to the terminals attached to said cell and/or to at least one other cell controlled by the base station and neighbouring said cell and/or to at least one base station controlling a cell neighbouring said cell;
- a module for sending to the interfering terminal, in at least one configuration message, the open network temporary identifier and the code which are assigned to the interfering terminal;
- a module for inserting this code, into a field of a physical control channel intended for the interfering terminal and allocating transmission resources on the cellular network to the interfering terminal;
- a module for coding this physical channel using the open network temporary identifier assigned to the interfering terminal; and
- a module for transmitting this physical channel over the cellular network.

13. Communication method, intended to be implemented by an interfering terminal (T1) attached to a cell (C1) of a cellular telecommumications network (NW), this cell being controlled by a base station (BS1), the interfering terminal being likely to interfere with at least one communication set up by another terminal of said cell or of a cell neighbouring this cell, the communication method comprising:
- a step of reception (F20) of at least one configuration message from the base station (BS1), comprising a so-called open network temporary identifier (RNTIo1) published or intended to be published by the base station and a code (COD1) which are assigned to the interfering terminal;
- a step of decoding (F40) of a physical control channel allocating transmission resources on the cellular network using this open network temporary identifier;
- a step of verification (F50) of the presence of the code assigned to the interfering terminal in the decoded physical channel; and
- if the code is present in the decoded physical channel, a step of use (F70) of the transmission resources allocated in this channel intended for the interfering terminal to communicate over the cellular network.

14. Terminal (T1) attached to a cell (C1) of a cellular telecommunications network (NW), said cell being controlled by a base station (BS1), said terminal being likely to interfere with at least one communication set up by another terminal attached to said cell (C1) and/or to a cell (C2) neighbouring said cell, and comprising:
- a module for receiving at least one configuration message from the base station (BS1), comprising a so-called open network temporary identifier (RNTIo1) published or intended to be published by the base station and a code (COD1) which are assigned to the terminal (T1);
- a module for decoding a physical control channel allocating transmission resources on the cellular network using this open network temporary identifier;
- a module for verifying the presence of the code (COD1) assigned to the terminal in the decoded physical channel; and
- a module, activated if the code is present in the decoded physical channel, for using the transmission resources allocated in this channel intended for the interfering terminal to communicate over the cellular network.

15. System (1) of a cellular telecommunications network (NW) comprising:
- a base station (BS1) according to Claim 12 controlling at least one cell of the cellular telecommunications network;
- an interfering terminal (T1) according to Claim 14 attached to this cell; and
- a terminal (T2, T1') interfered with by a transmission from the base station (BS1) to said interfering terminal, said terminal interfered with being attached to the cell (C1) of the interfering terminal or to a cell (C2) of the network neighbouring this cell, and being capable of implementing an interference cancelling technique using the open network temporary identifier allocated to the interfering terminal and published by the base station (BS1).
